# EUROPÄISCHE PATENTSCHRIFT

(11) **EP 2 616 323 B1**
(45) Veröffentlichungstag und Bekanntmachung des Hinweises auf die Patenterteilung: **18.04.2018**
(21) Anmeldenummer: 11754676.2
(22) Anmeldetag: 09.09.2011
(51) Int. Cl.: B63H 9/02

(54) **MAGNUS-ROTOR**
MAGNUS ROTOR
ROTOR À EFFET MAGNUS

(30) Priorität: 16.09.2010 DE 102010040906
(43) Veröffentlichungstag der Anmeldung: 24.07.2013
(73) Patentinhaber: Wobben Properties GmbH, 26607 Aurich (DE)
(72) Erfinder: ROHDEN, Rolf, Aurich 26607 (DE)
(74) Vertreter: Eisenführ Speiser
(86) Internationale Anmeldenummer: PCT/EP2011/065672
(87) Internationale Veröffentlichungsnummer: WO 2012/034947

(56) Entgegenhaltungen:
- DE-A1-102006 025 732
- DE-C- 558 426
- GB-A- 2 332 891
- US-A- 4 602 584
- Claus D. Wagner: "Die Segelmaschine" In: "Die Segelmaschine", 1 January 1991 (1991-01-01), Hamburg, XP055177135, page 158, * *

## Beschreibung

Die Erfindung betrifft einen Magnus-Rotor.

Magnus-Rotoren werden auch als Flettner-Rotoren oder Segel-Rotoren bezeichnet.

Magnus-Rotoren sind im Stand der Technik bekannt. Insbesondere als Schiffsantriebe sind sie auch unter dem Begriff Flettner-Rotor bekannt geworden und in dem Buch "Die Segelmaschine" von Klaus D. Wagner, Ernst Kabel Verlag GmbH, Hamburg, 1991, ist die Ausrüstung von Schiffen mit einem solchen Flettner-Rotor oder Magnus-Rotor beschrieben.

Aus der CH 116268 ist ein Magnus-Rotor bekannt, der auf einem Pivot getragen wird. Dabei kann der Magnus-Rotor auf verschiedene Art und Weise in Rotation versetzt werden. Zum einen werden am inneren Umfang des Rotors Führungsräder vorgesehen, die als Rotorantrieb dienen. Zum anderen können diese als Rotorantrieb dienenden Führungsräder außerhalb des Rotorumfangs vorgesehen sein. Ferner kann der Antrieb des Rotors zentrisch zum Rotor so angeordnet werden, dass der eine Teil eines den zylindrischen Rotor antreibenden Motors mit dem Pivot fest verbunden ist und der andere Teil mit dem rotierenden Zylinder verbunden ist.

Allen zuvor beschriebenen Antrieben eines Magnus-Rotors ist dabei gemeinsam, dass der rotierende Zylinder des Magnus- oder Flettner-Rotors angetrieben wird.

Als allgemeiner Stand der Technik wird auf die folgenden Dokumente verwiesen: WAGNER, Claus D.: Die Segelmaschine. Hamburg: Ernst Kabel Verlag GmbH, 1991. S. 156, 158, 159. - ISBN 3-8225-0158-1; DE 558 426 A; US 4,602,584 A; DD 255 923 A1; DE 10 2005 062 615 A1; US 4,401,284 A; ROLOFF/MATEK: Maschinenelemente. 17. Auflage. Wiesbaden: Friedr. Vieweg & Sohn Verlag/GWV Fachverlage GmbH, 2005. S. 557-559. - ISBN 3-528-17028-X; US 1,697,779 A; DE 10 2006 025 732 B4 und AT 110 303 B.

Der Erfindung liegt die Aufgabe zugrunde, eine alternative Antriebsmöglichkeit für einen Magnus-Rotor zu schaffen.

Die Aufgabe wird erfindungsgemäß durch einen Magnus-Rotor mit den Merkmalen nach Anspruch 1 sowie ein Schiff, insbesondere Frachtschiff, nach Anspruch 14 gelöst. Vorteilhafte Weiterbildungen sind in den Unteransprüchen beschrieben.

Somit wird erfindungsgemäß ein Magnus-Rotor vorgesehen mit einem Träger, welcher im Inneren des Magnus-Rotors angeordnet ist, einem Rotor, welcher im Betrieb des Magnus-Rotors um den Träger rotiert, einer Lagerung, welche den Rotor auf dem Träger trägt, und einer Welle, welche durch die Lagerung hindurch angeordnet ist und welche mit dem Rotor oberhalb der Lagerung verbunden ist.

Vorteilhaft bei dieser Art eines Antriebs für einen Magnus-Rotor ist, dass eine Welle auf der Mittelachse des Magnus-Rotors vorgesehen werden kann, um auf dieser Achse den Rotor anzutreiben. So können alle Antriebskomponenten innerhalb des Trägers vorgesehen werden und die Rotation des Rotors kann mittels der Welle vom Inneren des Trägers heraus auf den Rotor übertragen werden. Somit sind erfindungsgemäß oberhalb der Lagerung lediglich starr miteinander verbundene mechanische Komponenten vorgesehen, während die Antriebskomponenten im Inneren des Trägers unterhalb der Lagerung vorgesehen sein können.

Gemäß einem Aspekt der Erfindung weist der Magnus-Rotor einen Motor auf, welcher im Inneren des Trägers angeordnet ist und welcher die Welle rotierend antreibt. Hierdurch kann der Antrieb der Welle im Inneren des Trägers geschützt vor Witterung und Umwelteinflüssen sicher untergebracht werden. Gerade an Deck eines Schiffes können auf See starke Witterungseinflüsse wie Wind und Regen herrschen, die die Komponenten des Antriebs angreifen können und einen entsprechenden Schutz gegen die Witterung erfordern. Auf einen solchen zusätzlichen Schutz kann verzichtet werden, falls der Antrieb im Inneren des Trägers vorgesehen ist. Dabei können derartige Witterungsverhältnisse auch die Wartung etc. durch das Personal erschweren. Hingegen kann im Inneren eines Magnus-Rotors unabhängig von der Witterung und der Tageszeit unter für das Personal angenehmeren Bedingungen gearbeitet werden. Ferner wird die Wartung etc. vereinfacht, da zusätzliche Schutzelemente gegen die Witterung, die bei der Wartung entfernt werden müssten, nicht nötig sind.

Gemäß einem weiteren Aspekt der Erfindung weist sowohl der Motor als auch die Welle ein Zahnrad auf. Das Zahnrad des Motors treibt einen Zahnriemen rotierend an, der über das Zahnrad die Welle rotierend antreibt. Auf diese Weise wird mittels eines robusten und erprobten Antriebsprinzips die Welle angetrieben, um ihrerseits den Rotor rotierend anzutreiben.

Gemäß einem Aspekt der Erfindung ist der Motor auf einer Spannvorrichtung vorgesehen, wobei die Spannvorrichtung radial verschiebbar mit dem Träger verbunden ist. Hierdurch kann der Zahnriemen zwischen Motor und Welle entspannt oder gespannt werden, um diesen auszutauschen oder auch die Spannung auf dem Zahnriemen vorzugeben.

Gemäß einem weiteren Aspekt der Erfindung weist der Magnus-Rotor eine Einhausung, welche den Motor und bzw. oder das Zahnrad und bzw. oder den Zahnriemen und bzw. oder das Zahnrad und bzw. oder den im Inneren des Trägers angeordneten Teil der Welle zumindest seitlich und nach oben und radial abschließt. Dies ist vorteilhaft, um hierdurch einerseits das Personal vor den sich bewegenden Elementen des Antriebs zu schützen und andererseits den Antrieb vor Verschmutzung oder Beschädigung durch das Eindringen von Gegenständen und Fremdkörpern zwischen die sich bewegenden Elemente zu schützen.

Gemäß einem Aspekt der Erfindung weist der Motor an seiner Oberseite wenigstens einen Befestigungspunkt und der Träger an seiner Innenseite oberhalb des Motors wenigstens einen Befestigungspunkt auf. Zwischen dem Befestigungspunkt des Motors und dem Befestigungspunkt des Trägers ist ein Befestigungsmittel vorgesehen, um die Gewichtskraft des Motors über den Befestigungspunkt des Motors auf den Befestigungspunkt des Trägers zu übertragen. Hierdurch wird der Motor gegen ein Herunterfallen innerhalb des Inneren des Trägers geschützt, sollten sich die Befestigungsmittel, mit denen der Motor im Inneren des Trägers befestigt ist, ungewollt lösen.

Gemäß einem weiteren Aspekt der Erfindung weist der Magnus-Rotor eine Wellenbefestigungsvorrichtung, die am oberen Ende der Welle oberhalb der Lagerung vorgesehen ist, und eine Rotorbefestigungsvorrichtung, die die Wellenbefestigungsvorrichtung mit dem Rotor verbindet, auf. Über diese Elemente sind die Welle und der Rotor fest und starr miteinander verbunden.

Gemäß einem weiteren Aspekt der Erfindung wird ein Magnus-Rotor vorgesehen mit einer am unteren Außenumfang des Magnus-Rotors angeordneten Führungsrolle, welche spielfrei am Magnus-Rotor anliegt, einer Trittfläche, welche unterhalb der Führungsrolle angeordnet ist, und einer Abdeckung, welche die Führungsrolle und die Trittfläche abdeckt. Die Abdeckung gibt in einem geöffneten Zustand die Führungsrolle und die Trittfläche so frei, dass eine Person auf der Trittfläche Arbeiten an der Führungsrolle durchführen kann. Ein Vorteil dieser Trittfläche besteht darin, dass auf diese Weise die Notwendigkeit vermieden wird, dass sich das Personal für Wartungs- oder Austauscharbeiten über eine Leiter oder Arbeitsbühne Zugang zu der entsprechenden Führungsrolle verschaffen muss. Diese Leiter oder Arbeitsbühne wäre, gerade auf dem Deck eines Schiffes, nur mit größerem Aufwand gegen ein Verrutschen oder Verfahren zu sichern. Ferner kann bei einem durch Regen und Gischt stets feuchten Schiffsdeck die Rutschgefahr nie vollkommen beseitigt werden, die auch das Verrutschen von z.B. Leitern oder Arbeitsbühnen bewirkt. So stellen Leitern, Arbeitsbühnen und ähnliche Hilfsmittel zum Erreichen einer Führungsrolle stets eine Gefahrenquelle für das Personal dar, die erfindungsgemäß durch die unterhalb oder neben der Führungsrolle vorgesehene Trittfläche vermieden werden kann. Auch kann neben einer heruntergeklappten Abdeckung kein oder kaum Platz sein, um hier eine Leiter oder Arbeitsbühne zu positionieren oder zumindest so, dass von dieser aus ein Zugang zu der Führungsrolle möglich ist, um die Arbeiten durchführen zu können. Ferner stellt das Aufstellen und Wegräumen einer Leiter oder einer Arbeitsbühne einen zusätzlichen Aufwand dar, der durch das Vorsehen einer integrierten Trittfläche vermieden werden kann. Somit wird durch das Vorsehen der erfindungsgemä-βen Trittfläche unter der Führungsrolle das Arbeiten an dieser nicht nur sicherer, sondern auch einfacher und zeitsparender durchführbar.

Gemäß einem Aspekt der Erfindung ist die Trittfläche als Teil einer Grundplatte oder eines Schiffsdecks oder dergleichen ausgebildet, auf der der Magnus-Rotor befestigt ist. Hierdurch wird sichergestellt, dass die Trittfläche sich nicht gegenüber dem Schiffsdeck relativ bewegen kann, da sie als Teil des Schiffsdecks ausgebildet ist, d.h. ein Teil des Schiffsdecks oder auch des Fußes oder Unterbaus des Magnus-Rotors ist.

Gemäß einem weiteren Aspekt der Erfindung ist die Trittfläche mit einer Oberfläche versehen oder die Oberfläche beschichtet, um ein Rutschen auf der Trittfläche zu verhindern. Dies ist vorteilhaft, um die Rutschgefahr bei Betreten der Trittfläche oder Stehen auf der Trittfläche zu reduzieren, da gerade bei Arbeiten auf einem Schiffsdeck durch ein Stolpern oder Hinfallen das Personal stark gefährdet ist, z.B. durch ein Über-Bord-Fallen.

Gemäß einem Aspekt der Erfindung weist die Abdeckung eine Bewegungsvorrichtung auf, die dazu ausgestaltet ist, die Abdeckung in dem geöffneten Zustand in einer vertikalen Höhe oberhalb der Trittfläche zu halten. Durch diese Bewegungsvorrichtung wird einerseits das Hoch- und Herunterklappen der Abdeckung bzw. jedes Abdeckungssegments ermöglicht. Zum anderen wird hierdurch ein vollkommenes Herunterklappen oder auch Herunterfallen des Abdeckungssegments auf den Untergrund oder das Schiffsdeck verhindert, da durch die Bewegungsvorrichtung das Abdeckungssegment in einer bestimmten Höhe über dem Untergrund oder Schiffsdeck gehalten werden kann. Dabei ist es vorteilhaft, diese bestimmte Höhe so zu wählen, dass das Abdeckungssegment zumindest teilweise oberhalb der Trittfläche positioniert wird. Hierdurch kann durch das heruntergeklappte Abdeckungssegment ein Schutz geschaffen werden, der ein Herunterfallen einer Person, die sich auf der Trittfläche befindet, auf den Untergrund oder das Schiffsdeck verhindert.

Gemäß einem weiteren Aspekt der Erfindung ist die Bewegungsvorrichtung dazu ausgestaltet ist, sich in dem geöffneten Zustand der Abdeckung in eine im Wesentlichen radiale Richtung des Magnus-Rotors von diesem zur geöffneten Abdeckung oberhalb der Trittfläche zu erstrecken. Hierdurch bilden die heruntergeklappte Abdeckung nach Hinten und bzw. oder die Bewegungsvorrichtung zu den Seiten gemeinsam oder jeweils alleine einen Schutz gegen ein Herunterfallen einer sich auf der Trittfläche aufhaltenden Person. Es wird sozusagen eine Arbeitskanzel ausgebildet, um einer sich auf der Trittfläche aufhaltenden Person Schutz in alle Richtungen gegen ein Herunterfallen zu geben.

Gemäß einem Aspekt der Erfindung wird die Bewegungsvorrichtung mittels einer Arretierungsvorrichtung in dem geschlossenen Zustand der Abdeckung gesichert. Dies ist vorteilhaft, da durch diese Arretierung die Abdeckung gesichert und gegen ein ungewolltes Herunterklappen, d.h. Öffnen, insbesondere bei starkem Seegang eines Schiffes, auf dem der Magnus-Rotor verwendet wird, gesichert werden kann. Ferner kann mittels dieser Arretierung jedes Segment der Abdeckung einzeln geöffnet, d.h. heruntergeklappt werden. Diese Arretierung ist vorteilhafterweise von Außen zugänglich und einfach und schnell ohne Hilfsmittel und Werkzeuge z.B. durch eine Drehung um 90° zu bedienen.

Ausführungsbeispiele und Vorteile der Erfindung werden nachstehend unter Bezugnahme auf folgende Figuren näher erläutert:
- Fig. 1: zeigt eine perspektivische schematische Darstellung eines Magnus-Rotors gemäß einem ersten Ausführungsbeispiel,
- Fig. 2: zeigt eine seitliche schematische Darstellung eines Magnus-Rotors gemäß dem ersten Ausführungsbeispiel,
- Fig. 3: zeigt eine seitliche schematische Detaildarstellung eines Magnus-Rotors gemäß dem ersten Ausführungsbeispiel,
- Fig.4: zeigt eine weitere seitliche schematische Detaildarstellung eines Magnus-Rotors gemäß dem ersten Ausführungsbeispiel,
- Fig. 5: zeigt eine weitere seitliche schematische Detaildarstellung eines Magnus-Rotors gemäß dem ersten Ausführungsbeispiel,
- Fig. 6: zeigt eine weitere seitliche schematische Detaildarstellung eines Magnus-Rotors gemäß dem ersten Ausführungsbeispiel,
- Fig. 7: zeigt eine seitliche Detaildarstellung eines Magnus-Rotors gemäß dem ersten Ausführungsbeispiel,
- Fig. 8: zeigt eine seitliche detaillierte Darstellung eines Magnus-Rotors gemäß dem ersten Ausführungsbeispiel,
- Fig. 9: zeigt eine schematische Darstellung einer perspektivischen Darstellung eines Magnus-Rotors,
- Fig. 10: zeigt eine schematische Darstellung einer perspektivischen Darstellung eines Magnus-Rotors,
- Fig. 11: zeigt eine schematische vereinfachte Darstellung von Abdeckungssegmenten der Führungsrollen eines Magnus-Rotors,
- Fig. 12: zeigt eine Darstellung eines Magnus-Rotors, dessen Abdeckungssegmente der Führungsrollen geschlossen sind,
- Fig. 13: zeigt eine Darstellung eines Magnus-Rotors, dessen Abdeckungssegmente der Führungsrollen teilweise geöffnet sind,
- Fig. 14: zeigt eine Darstellung von Führungsrollen eines Magnus-Rotors,
- Fig. 15: zeigt eine Darstellung einer Führungsrolle eines Magnus-Rotors, dessen Abdeckungssegment geöffnet ist,
- Fig. 16: zeigt eine vereinfachte schematische Seitenansicht des oberen Teils eines Magnus-Rotors,
- Fig. 17: zeigt eine detaillierte schematische Ansicht eines Magnus-Rotors von oben,
- Fig. 18: zeigt eine detaillierte schematische Ansicht des Inneren eines Magnus-Rotors von oben, und
- Fig. 19: zeigt eine weitere vereinfachte schematische Seitenansicht des oberen Teils eines Magnus-Rotors.

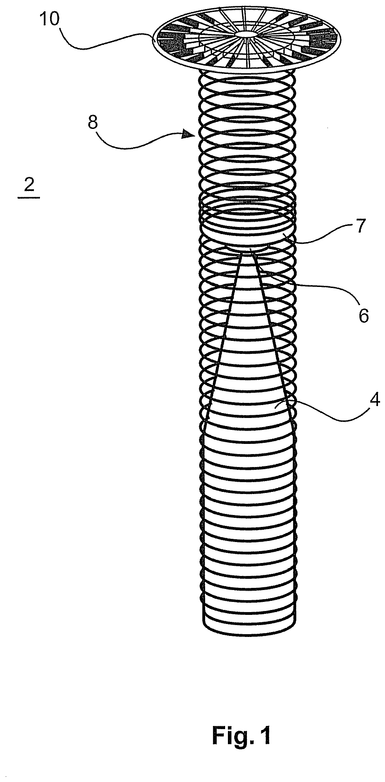

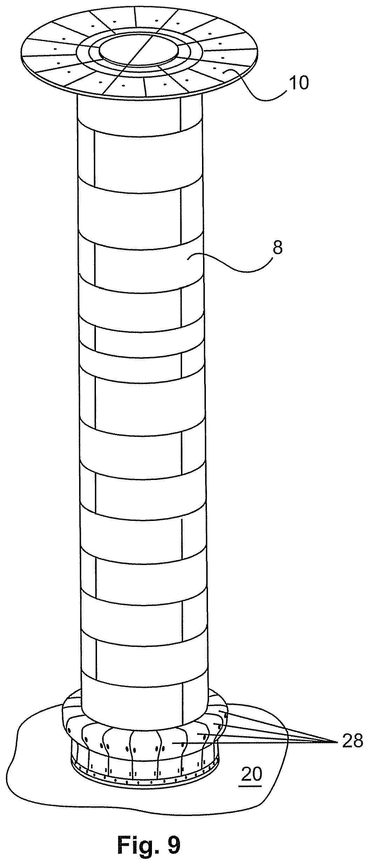

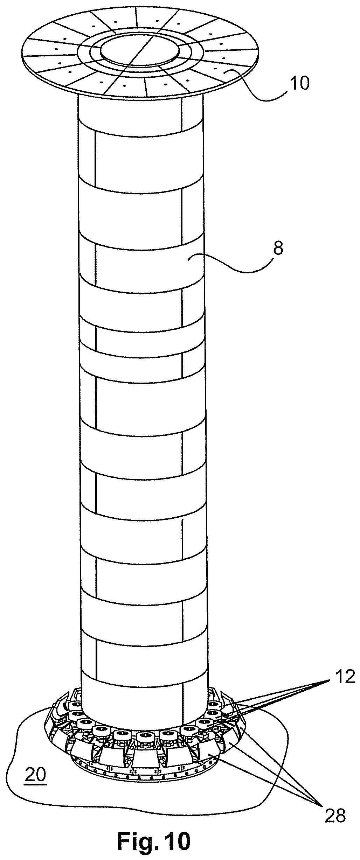

**Fig. 1** zeigt eine perspektivische schematische Darstellung eines Magnus-Rotors 2 gemäß einem ersten Ausführungsbeispiel. Der Magnus-Rotor 2 weist einen Träger 4 als unteren stehenden Teil auf. Der Träger 4 ist auf einem Untergrund montiert, der eine Grundplatte oder das Deck eines Schiffes sein kann (nicht darstellt, vgl. **Fig. 9** **und** **10**). Um den Träger 4 herum ist der Rotor 8 angeordnet. Dieser Rotor 8 ist vorzugsweise als Zylinder ausgebildet und vom Träger 4 so beabstandet, dass sich der Rotor 8 um den Träger 4 um die gemeinsame Mittelachse drehen kann. Der Träger 4 und der Magnus-Rotor 2 selbst sind ebenfalls vorzugsweise zylindrisch ausgebildet. Der Rotor 8 weist in seinem Inneren eine Nabe 7 auf, über die der Rotor 8 über eine Lagerung 6 mit dem Träger 4 verbunden ist. Dabei trägt die Lagerung 6 den Rotor 8 mittels der Nabe 7. Der Rotor 8 weist ferner an einem oberen Ende eine scheibenförmige Endplatte 10 auf, die den Innenraum des Rotors 8 horizontal abschließt. Alle vorbenannten Elemente des Magnus-Rotors 2 sind dabei rotationssymmetrisch zur Mittelachse, d.h. zur Drehachse, des Magnus-Rotors 2 ausgebildet.

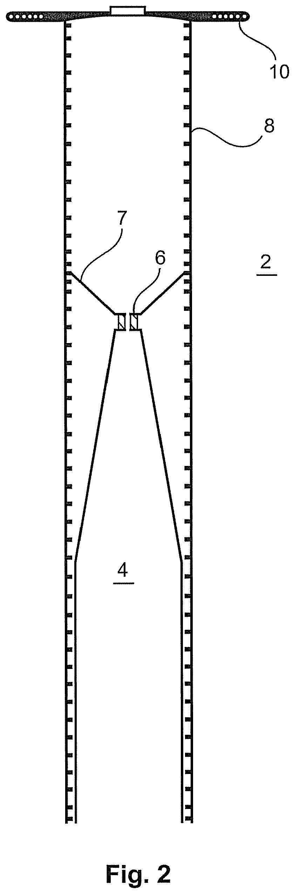

**Fig. 2** zeigt eine seitliche schematische Darstellung eines Magnus-Rotors 2 gemäß dem ersten Ausführungsbeispiel. **Fig. 2** zeigt dabei die Elemente des Magnus-Rotors 2 der **Fig. 1****.**

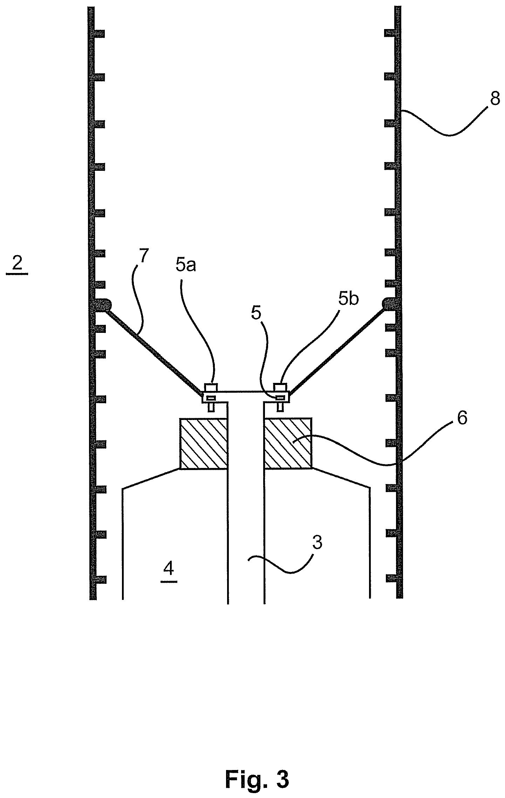

**Fig. 3** zeigt eine seitliche schematische Detaildarstellung eines Magnus-Rotors 2 gemäß dem ersten Ausführungsbeispiel. Im Detail dargestellt ist hier der mittlere Teil des Magnus-Rotors 2, in dem der Rotor 8 und der Träger 4 über die Lagerung 6 miteinander verbunden sind. In dieser Darstellung ragt eine Welle 3 auf der Mittelachse des Magnus-Rotors 2 vom Innenraum des Trägers 4 nach oben heraus. Dabei wird die Welle 3 von der Lagerung 6 in vertikaler Richtung gehalten und in horizontaler Richtung so gelagert, dass sich die Welle 3 um die Mittelachse des Magnus-Rotors 2 drehen kann. Die Welle 3 schließt in diesem Ausführungsbeispiel an ihrem oberen Ende oberhalb der Lagerung 6 mit einem Flansch 5 ab, der in diesem Ausführungsbeispiel einen größeren radialen Durchmesser aufweist als die Welle 3 und die Lagerung 6. An diesem Flansch 5 ist die Nabe 7 befestigt, z.B. mittels Schrauben oder Bolzen 5a, 5b. Dabei ist es vorteilhaft, diese Verbindung zwischen Flansch 5 und Nabe 7 lösbar vorzusehen anstelle z.B. einer Verschweißung, um die Montage zu erleichtern und auch ein Trennen dieser Elemente z.B. für eine Reparatur oder Wartung zu ermöglichen. Auch können nicht alle Verbindungsstellen zwischen Flansch 5 und Nabe 7 so vorgesehen sein, dass sie zum Schwei-βen zugänglich sind.

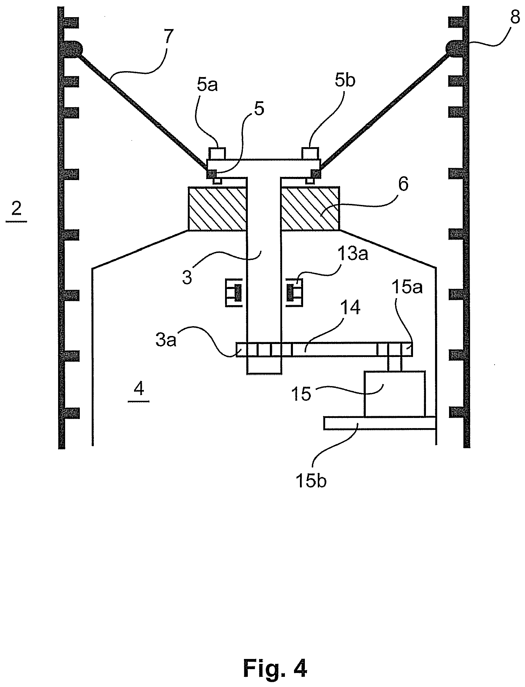

**Fig. 4** zeigt eine weitere seitliche schematische Detaildarstellung eines Magnus-Rotors 2 gemäß dem ersten Ausführungsbeispiel. Neben den mit Bezug auf **Fig. 3** beschriebenen Elementen sind in der **Fig. 4** weitere Details des erfindungsgemäßen Antriebs dargestellt. So ist im Inneren des Trägers 4 eine Bremse 13a vorgesehen, die auf die Welle 3 wirken kann, d.h. die die Welle 3 abbremsen und bzw. oder festsetzen kann. Dies kann z.B. durch eine Bremse 13a durchgeführt werden, die mittels Bremsbacken oder dergleichen radial auf die Welle 3 wirkt. Weiter ist im Inneren des Trägers 4 ein Motor 15 angeordnet, der z.B. ein elektrischer Motor sein kann. Der Motor 15 weist ein Antriebszahnrad 15a auf, welches über einen Zahnriemen 14 mit einem Abtriebszahnrad 3a der Welle 3 verbunden ist. Über die beiden Zahnräder 15a und 3a sowie den Zahnriemen 14 wird eine Drehung des Motors 15 auf die Welle 3 übertragen. Die Welle 3 ist in der Lagerung 6 drehbar um die Mittelachse des Magnus-Rotors 2 gelagert, so dass sie sich durch den Antrieb des Motors 15 um diese Mittelachse dreht. Da die Welle 3 oberhalb der Lagerung 6 über den Flansch 5 und die Nabe 7 mit dem Rotor 8 fest und starr verbunden ist, wird die Drehung der Welle 3 auf den Rotor 8 übertragen.

In der **Fig. 4** ist ferner eine Spannvorrichtung 15b dargestellt. Diese ist für einen Wechsel des Zahnriemens 14 erforderlich. So kann der Motor 15 mittels der Spannvorrichtung 15b zum Entfernen eines Zahnriemens 14 radial zur Mittelachse des Magnus-Rotors 2 hinbewegt werden. Dadurch wird der Zahnriemen entspannt. In diesem entspannten Zustand kann der Zahnriemen 14 von den Zahnrädern 15a und 3a entfernt und ein neuer Zahnriemen 14 kann auf diesen vorgesehen werden. Da in diesem lockeren Zustand eine Kraftübertragung über den Zahnriemen 14 zwischen den Zahnrädern 15a und 3a nicht möglich ist, wird nun der Motor 15 mittels der Spannvorrichtung 15b radial von der Mittelachse des Magnus-Rotors 2 wegbewegt. Hierdurch wird der Zahnriemen 14 gespannt. Dabei ist der Motor 15 derart weit von der Mittelachse des Magnus-Rotors 2 radial wegzubewegen und der Zahnriemen 14 entsprechend so weit zu spannen, dass einerseits eine Kraftübertragung von dem Antriebszahnrad 15a auf das Abtriebszahnrad 3a sicher möglich ist, d.h. dass der Zahnriemen 14 sicher in die Zähne der Zahnräder 15a und 3a eingreift und nicht durchrutscht, und andererseits der Zahnriemen 14 nur so stark gespannt wird, dass dieser nicht reißen kann und auch die Zahnräder 15a und 3a nicht zu stark belastet werden, d.h. dass auf diese keine unzulässigen Kräfte in radialer Richtung durch den Zahnriemen 14 wirken, die eine Verformung oder Beschädigung der Zahnräder 15a und 3a hervorrufen könnten.

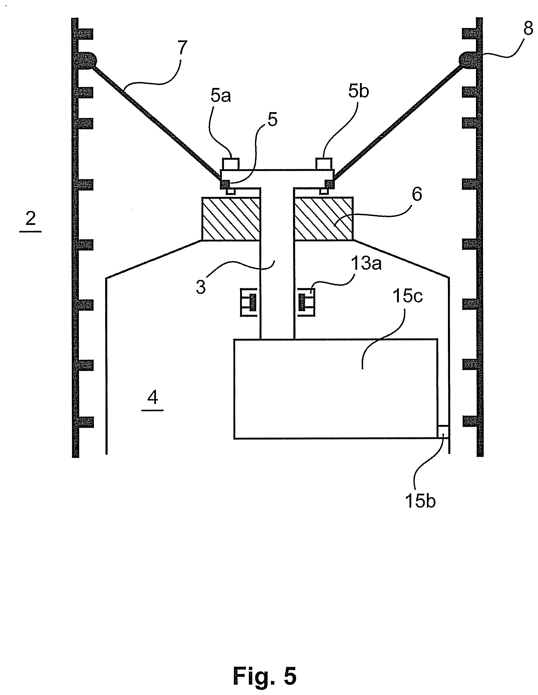

**Fig. 5** zeigt eine weitere seitliche schematische Detaildarstellung eines Magnus-Rotors 2 gemäß dem ersten Ausführungsbeispiel. In dieser Darstellung sind im Wesentlichen die Elemente der **Fig. 4** gezeigt. Dabei sind der Motor 15, der Zahnriemen 14, die Zahnräder 15a und 3a sowie der größte Teil der Spannvorrichtung 15b unter einer Abdeckung 15c verborgen. Die Bremse 13a kann ebenfalls unter der Abdeckung 15c verborgen sein, wenngleich in dieser Darstellung die Bremse 13a außerhalb der Abdeckung 15c vorgesehen ist. Diese Abdeckung 15c weist an ihrer Oberseite eine Öffnung auf, durch die die Welle 3 hindurchtreten kann. Ferner weist die Abdeckung 15c radial nach außen eine Öffnung auf, durch die die Spannvorrichtung 15b hierdurchtreten kann, um dort z.B. mit dem Träger 4 verbunden zu sein. Die Abdeckung 15c dient dabei dem Schutz des Personals, welches sich im Inneren des Trägers 4 aufhalten kann, um zu vermeiden, dass das Personal durch die beweglichen Elemente des Antriebs, d.h. des Motors 15, der Zahnräder 15a und 3a, des Zahnriemens 14 und der Welle 3, verletzt werden kann. Ferner schützt die Abdeckung 15c den Antrieb vor Schmutz oder auch losen Teilen, die in den Antrieb fallen und dort zwischen die beweglichen Elemente kommen und diesen damit beschädigen könnten.

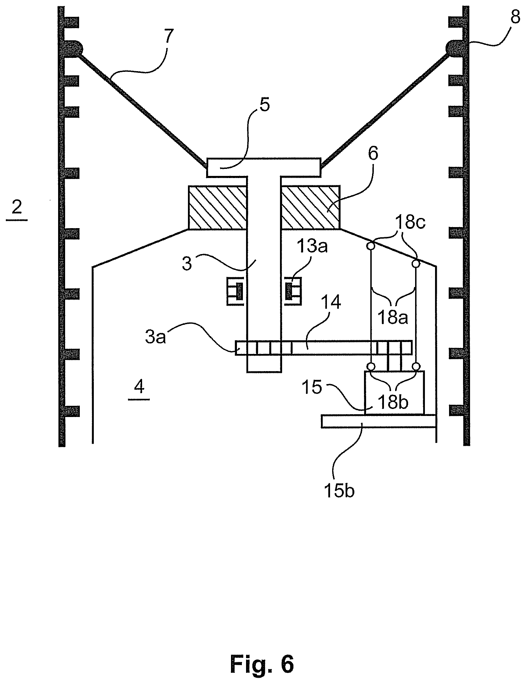

**Fig. 6** zeigt eine weitere seitliche schematische Detaildarstellung eines Magnus-Rotors 2 gemäß dem ersten Ausführungsbeispiel. Hierbei sind die Elemente des Magnus-Rotors 2 nach **Fig. 4** dargestellt, d.h. der Antrieb ohne die Abdeckung 15c der **Fig. 5****.** Zusätzlich sind Ösen 18b dargestellt, die an der Oberseite des Motors 15 vorgesehen sind. An der Innenseite des Trägers 4 sind Ösen 18c vorgesehen. Anstelle von Ösen können auch andere Befestigungspunkte wie Haken, Augen, Winkel, Löcher oder dergleichen vorgesehen sein. Zwischen den Ösen des Motors 18b und den Ösen des Trägers 18c sind Seile 18a vorgesehen, die derart gespannt sind, dass sie einerseits nicht durchhängen und umher pendeln können, andererseits auch keine Kräfte, d.h. Gewichtskräfte vom Motor 15 und den mit ihm verbundenen Elementen wie z.B. der Spannvorrichtung 15b, dem Antriebszahnrad 15a oder dem Zahnriemen 14 aufnehmen. Diese Seile 18a oder vergleichbare Befestigungsmittel dienen dabei der Sicherung des Motors 15 und der mit ihm verbundenen Elemente für den Fall, dass sich die Befestigung des Motors 15 oder der Spannvorrichtung 15b lösen sollte, z.B. dass durch die Drehungen des Motors 15, des Zahnriemens 14, der Welle 3 und des Rotors 8 in dem Magnus-Rotor 2 derartige Schwingungen angeregt werden sollten, dass sich hierdurch die Schrauben oder ähnliche Befestigungsmittel, mit denen der Motor 15 an der Spannvorrichtung 15b befestigt ist oder mit denen die Spannvorrichtung 15b an dem Träger 4 befestigt ist, lösen sollten. Dabei sind die Seile 18c derart zu spannen, dass sie durch das Herunterfallen des Motors 15 keine impulsartige Anregung aufnehmen, da sie durch eine derartige plötzliche Belastung eher reißen könnten als durch eine konstant ausgeübte Gewichtskraft des Motors 15.

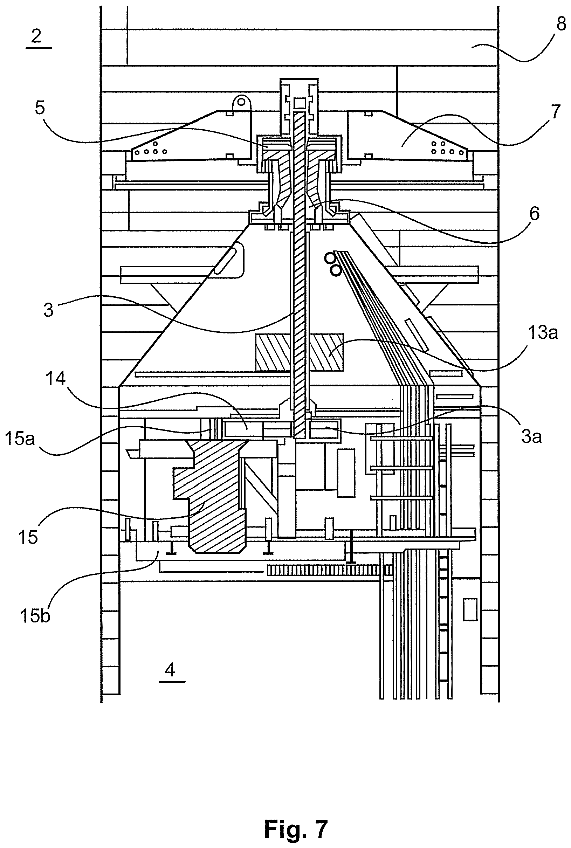

**Fig. 7** zeigt eine seitliche Detaildarstellung eines Magnus-Rotors 2 gemäß dem ersten Ausführungsbeispiel. Dabei sind die Elemente der vorherigen **Fig. 1 bis 6** im Detail ohne Abdeckung 15c dargestellt.

Der Motor 15 des erfindungsgemäßen Antriebs eines Magnus-Rotors 2 ist im Inneren des Trägers 4 angeordnet und treibt dort ein Zahnrad 15a zur Rotation an. Dieses Zahnrad 15a ist über einen Zahnriemen 14 mit einem Zahnrad 3a verbunden, welches im unteren Bereich der Welle 3 angeordnet ist. Über den Zahnriemen 14 wird somit die Rotation des Motors 15 über das Antriebszahnrad 15a auf das Abtriebszahnrad 3a der Welle 3 übertragen, d.h. der Motor 15 versetzt die Welle 3 in Rotation. Dabei kann über das Verhältnis der Zähne der Zahnräder 15a und 3a die Übersetzung zwischen Motor 15 und Welle 3 vorgegeben werden. Ferner kann auch ein Getriebe an der Abtriebsseite des Motors 15 vorgesehen werden, um eine Übersetzung vom Motor 15 auf das Abtriebszahnrad 15a vorzugeben.

Die Welle 3 wird durch die Lagerung 6 hindurchgeführt. Dabei verbindet die Lagerung 6 den stehenden Träger 4 derart mit dem sich drehenden, durch die Welle 3 angetriebenen Rotor 8, dass ein Teil der Lagerung 6 fest und starr mit dem Träger 4 verbunden ist und der andere Teil der Lagerung 6 fest und starr mit der sich drehenden Welle 3 verbunden ist. Die Lagerung 6 kann dabei als Rollen-, Kugel-, Wälzlager oder dergleichen vorgesehen sein. Dabei ist die Lagerung 6 derart ausgebildet, dass die Welle 3 entgegen ihrer Gewichtskraft und der Gewichtskraft der mit der Welle 3 verbundenen Elemente wie Flansch 5, Nabe 7 und Rotor 8 entgegen der Schwerkraft gehalten wird. Ferner werden die radial wirkenden Kräfte, die während der Rotation der Welle 3 auftreten, durch die Lagerung 6 aufgenommen. Um die Mittelachse des Magnus-Rotors 2 ist die Welle 3 drehbar gelagert, d.h. die Welle 3 kann um die Mittelachse des Magnus-Rotors 2 rotieren. Dabei bildet die Mittelachse des Magnus-Rotors 2 die Symmetrieachse des Magnus-Rotors 2 und damit auch der Welle 3, des Trägers 4, des Flansches 5, der Lagerung 6, der Nabe 7 und des Rotors 8. Um die Welle 3 herum ist die Bremse 13a vorgesehen, die mit dem Träger 4 verbunden ist, um die Relativbewegung der rotierenden Teile, d.h. Welle 3, des Trägers 4, des Flansches 5, der Lagerung 6, der Nabe 7 und des Rotors 8, um den Träger 4 herum abzubremsen bzw. durch Festsetzen zu verhindern.

Oberhalb der Lagerung 6 ist die Welle 3 mit einem Flansch 5 verbunden, der als Teilbereich der Welle 3 ausgebildet oder als separates Element mit der Welle 3 verbunden sein kann. Der Flansch 5 ist mit der Nabe 7 verbunden, die wiederum mit dem Rotor 8 verbunden ist. Dabei sind die Elemente Welle 3, Flansch 5, Nabe 7 und Rotor 8 fest und starr miteinander verbunden und stellen gemeinsam den rotierenden Teil des Magnus-Rotors 2 dar, der durch den Motor 15 mittels Zahnriemen 14 rotierend angetrieben wird, d.h. der um den Träger 4 im Betrieb rotiert.

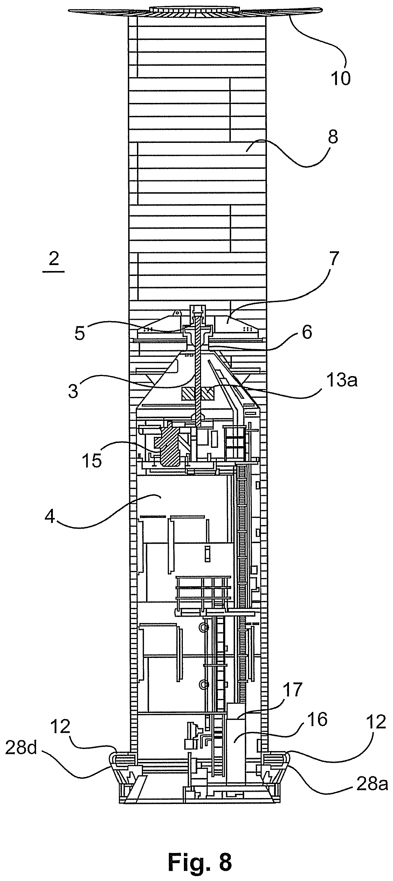

**Fig. 8** zeigt eine seitliche detaillierte Darstellung eines Magnus-Rotors 2 gemäß dem ersten Ausführungsbeispiel. Neben den in den vorherigen **Fig. 1 bis 7** gezeigten Elementen sind im Inneren des Trägers 4 in seinem unteren Bereich eine Steuerung 16 und ein Wechselrichter 17 dargestellt. Die Steuerung 16 kann den Wechselrichter 17, den Motor 15 und weitere Elemente des Magnus-Rotors 2 steuern. Der Wechselrichter 17 kann der Versorgung des Motors 15 mit elektrischer Energie dienen. Dabei sind der Motor 15, die Steuerung 16 und der Wechselrichter 17 im Inneren des Trägers 4 vorgesehen, um mit diesem gemeinsam entfernt und gegen einen anderen Magnus-Rotor 2 ausgetauscht zu werden, sollten Reparaturen oder Wartungen am Magnus-Rotor 2 oder einer seiner Komponenten erforderlich sein. Um den Magnus-Rotor 2 als modulare Komponente schnell und einfach entfernen zu können, sind die Verbindungen zur Zufuhr und bzw. oder Abfuhr von elektrischem Strom, Öl, Hydraulikmittel, Wasser, Druckluft oder dergleichen zum Motor 15, zur Steuerung 16 und zum Wechselrichter 17 derart vorgesehen, dass diese einfach und schnell zu trennen sind und der Magnus-Rotor 2 mittels eines Krans von einem Untergrund 20 (nicht dargestellt, vgl. **Fig. 9** **und** **10**) wie dem Deck eines Schiffes oder einer Grundplatte abgehoben werden kann.

Weiterhin sind in der **Fig. 8** Führungsrollen 12 sowie Abdeckungen 28a und 28d dargestellt. Die Abdeckungen 28a und 28d decken den unteren Umfangsrand des Rotors 8 und die Führungsrollen 12 ab und verhindern so einerseits, dass Fremdkörper in den Antrieb bzw. die Führungsrollen 12 gelangen und dass sich andererseits Bedienungspersonal an offenliegenden, rotierenden Teilen verletzen kann.

**Fig. 9** zeigt eine schematische Darstellung einer perspektivischen Darstellung eines Magnus-Rotors 2. Dabei ist der Magnus-Rotor 2 mit einer geschlossenen Oberfläche dargestellt, so dass der Träger 4 nicht dargestellt ist. In dieser Darstellung sind die Abdeckungen 28 in einer geschlossenen Position, d.h. in einer hochgeklappten Position, dargestellt, so dass die Abdeckungen 28 die Führungsrollen 12 abdecken. Dabei ist ein Magnus-Rotor 2 gezeigt, der auf dem Untergrund 20 wie dem Deck eines Schiffes oder einer Grundplatte befestigt ist.

**Fig. 10** zeigt eine schematische Darstellung einer perspektivischen Darstellung eines Magnus-Rotors 2 mit geöffneten, d.h. herunter geklappten Abdeckungen 28, die den Blick auf die darunter befindlichen Führungsrollen 12 freigeben. Dabei ist ein Magnus-Rotor 2 gezeigt, der auf dem Untergrund 20 wie dem Deck eines Schiffes oder einer Grundplatte befestigt ist.

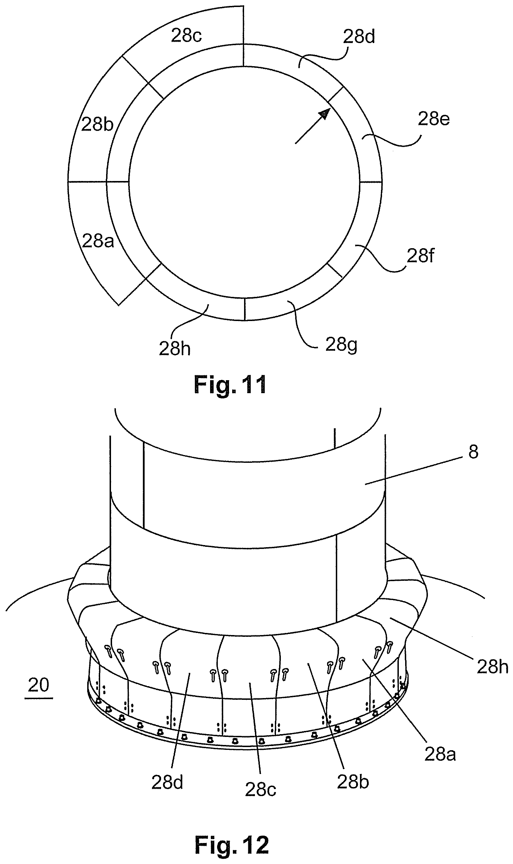

**Fig. 11** zeigt eine schematische vereinfachte Darstellung von Abdeckungssegmenten 28a bis 28h der Führungsrollen 12 eines Magnus-Rotors 2 in einer Draufsicht ohne die Endplatte 10 und ohne die Darstellung des Trägers 4 sowie der Lagerung 6. Um den Außenumfang des Magnus-Rotors 2 herum sind Abdeckungen 28a bis 28h angeordnet. Dabei sind die Abdeckungen 28a, 28b und 28c Abdeckungen, unter denen die Führungsrollen 12 angeordnet sind, während die Abdeckungen 28d bis 28h die Führungsrollen 12 abdecken. Durch die Segmentierung muss nicht jedes Mal die gesamte Abdeckung entfernt werden, um Zugang zu einzelnen Teilen des Antriebs- und Führungssystems zu erhalten.

**Fig. 12** zeigt eine Darstellung eines Magnus-Rotors 2, dessen Abdeckungssegmente 28a bis 28h der Führungsrollen 12 geschlossen sind. Dabei ist ein Magnus-Rotor 2 gezeigt, der auf dem Untergrund 20 wie dem Deck eines Schiffes oder einer Grundplatte befestigt ist.

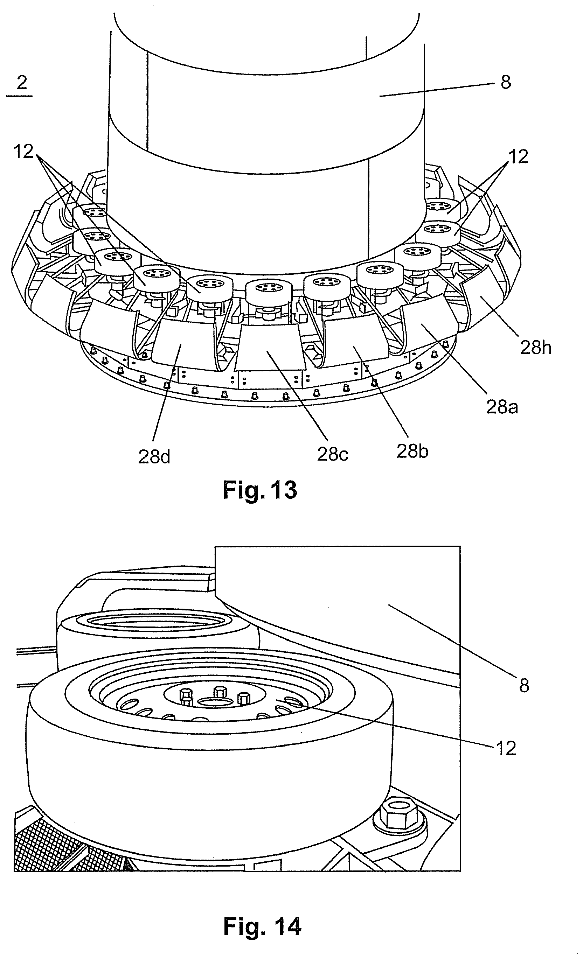

**Fig. 13** zeigt eine Darstellung eines Magnus-Rotors 2, dessen Abdeckungssegmente 28a bis 28h der Führungsrollen teilweise geöffnet sind. Dabei sind die Abdeckungssegmente 28a bis 28c geöffnet, d.h. in Richtung des Untergrunds 20 wie einem Schiffsdeck heruntergeklappt. Zu erkennen sind die Führungsrollen 12, von denen jeweils eine Führungsrolle 12 unter einem der Abdeckungssegmente 28a bis 28h abgedeckt werden kann.

**Fig. 14** zeigt eine Darstellung von Führungsrollen 12 eines Magnus-Rotors 2. Als Führungsrollen 12 können Reifen von Kraftfahrzeugen verwendet werden. Hierbei sind zur Reduzierung der Geräuschentwicklung bei laufendem Magnus-Rotor 2 profillose Reifen zu verwenden. Die Führungsrollen 12 sind auf einer Rotationsachse montiert, die parallel zur Rotationsachse des Magnus-Rotors 2 ausgerichtet ist. Sie sind an einem m unteren Umfangsrand des Rotors 8 des Magnus-Rotors 2 vorgesehen. Die Führungsrollen 12 sind über den gesamten Umfang des Magnus-Rotors 2 verteilt und liegen spielfrei daran an. Selbst wenn sich also z. B. durch eine Windböe und die relativ hoch angeordnete Lagerung (vergl. z. B. **Fig. 2**) ein Kippmoment ergeben sollte, kann dies nicht zu einer Schlagbewegung des Magnus-Rotors 2 führen, da die Führungsrollen 12 dieses sicher verhindern. Dadurch ist sichergestellt, dass der Magnus-Rotor 2 stets eine präzise Rotation ausführt.

Ein wesentlicher Vorteil dieses Führungssystems liegt in seiner guten Zugänglichkeit und in seinem einfachen Aufbau. Dabei entspricht der Aufbau der Führungsrollen 12 durch die Verwendung von Kraftfahrzeugreifen dem Aufbau einer Radaufhängung bei einem Kraftfahrzeug. Daher ist die Art der Montage der Führungsrollen 12 geläufig und bekannt, weshalb ein Austausch der Führungsrollen 12 sehr einfach und ohne hierfür spezielle Schulungen oder Werkzeuge zu benötigen erfolgen kann, da lediglich das gleiche Werkzeug wie bei einem Reifenwechsel eines Kraftfahrzeugs erforderlich ist.

Ferner ist es vorteilhaft, dass sich die Führungsrollen 12 außerhalb des Magnus-Rotors 2 befinden. So befinden sich am Magnus-Rotor 2 keinerlei Teile, die verschleißen oder beschädigt werden können. Auch der Austausch von Führungsrollen 12 ist problemlos möglich, da die Führungsrollen 12 von außen zugänglich sind. Die Wartung wird ebenfalls erleichtert, weil eine Sichtkontrolle sogar im laufenden Betrieb durchgeführt werden kann, da das Innere des Trägers 4 des Magnus-Rotors 2 nicht betreten werden muss. Dadurch können Störungen mit geringem Aufwand behoben werden.

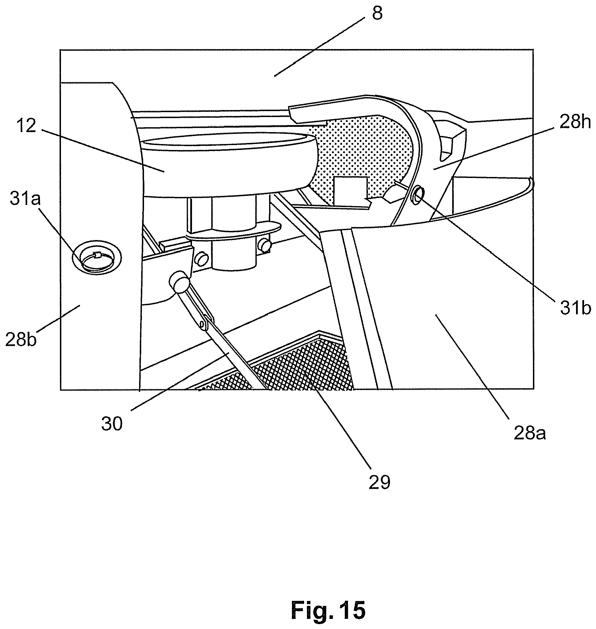

**Fig. 15** zeigt eine Darstellung einer Führungsrolle 12 eines Magnus-Rotors 2, dessen Abdeckungssegment 28a geöffnet ist. Die benachbarten Abdeckungssegmente 28b und 28h sind geschlossen. Das Abdeckungssegment 28a ist dabei so weit heruntergeklappt, dass eine Trittfläche 29, die sich unterhalb der Führungsrolle 12 befindet, sichtbar ist. Diese Trittfläche 29 ist unterhalb der Führungsrolle 12 vorgesehen und wird ebenfalls durch das Abdeckungssegment 28a abgedeckt, wenn dieses über die Führungsrolle 12 hochgeklappt und geschlossen wird. Zum Hoch- und Herunterklappen des Abdeckungssegments 28a sind Bügel 30 an beiden Seiten des Abdecksegments 28a vorgesehen. Das Abdeckungssegment 28a wird mittels zweier Hebel 31a und 31b in dem hochgeklappten Zustand gesichert.

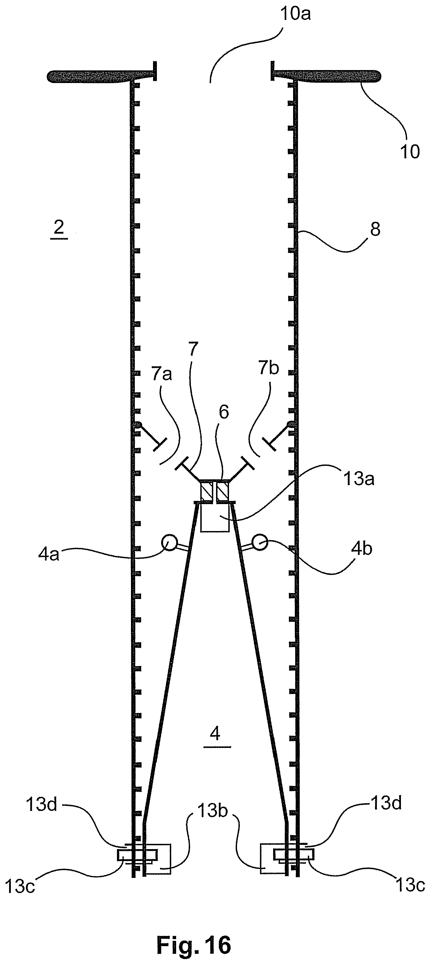

**Fig. 16** zeigt eine vereinfachte schematische Seitenansicht des oberen Teils eines Magnus-Rotors 2. Es ist eine Bremse 13a bzw. eine Sicherung 13b gezeigt, die beide als alternative Möglichkeiten oder auch gemeinsam dazu vorgesehen sind, eine Relativbewegung zwischen stehendem Träger 4 und Rotor 8 sicher zu verhindern. Dabei kann die Bremse 13a auf den Motor 15 oder die Welle 3 wirken. Die Sicherung 13b weist ein Sicherungselement 13c auf, welches ein Bolzen 13c oder dergleichen sein kann, welches durch eine Öffnung 13d des Rotors 8 radial hindurch geführt wird.

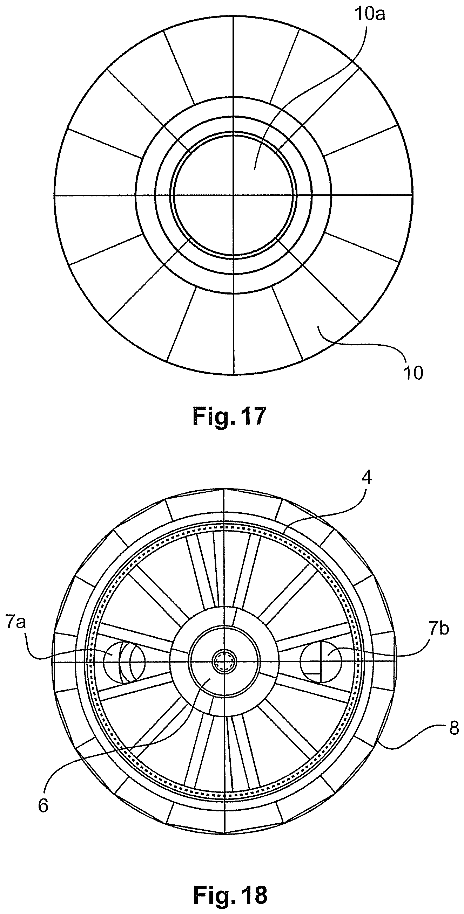

Hierbei ist in der Endplatte 10 eine Öffnung 10a vorgesehen, die den Innenraum des Rotors 8 oberhalb der Lagerung 6 mit der Umgebung des Magnus-Rotors 2 verbinden. Diese Öffnung 10a ist verschließbar ausgestaltet, um i.Allg. geschlossen zu sein, insbesondere im Betrieb des Magnus-Rotors 2. Die Öffnung 10a wird also nur in einem stehenden Zustand des Rotors 8, in dem der Rotor 8 durch die Bremse 13a oder die Sicherung 13b gesichert ist, geöffnet und sind ansonsten derart verschlossen, z.B. festgeschraubt, dass ein ungewolltes Öffnen der Öffnung 10a, insbesondere durch Fliehkräfte, die während des Betriebes des Magnus-Rotors 2 auftreten, sicher vermieden wird. Alternativ können auch zwei Öffnungen 10a und 10b, wie nachfolgend in **Fig. 17** dargestellt, vorgesehen werden.

Ferner sind in dem Flansch 7 zwei Öffnungen 7a und 7b vorgesehen. Auch diese können, ebenso wie die Öffnung 10a der Endplatte 10, geöffnet werden. Dies ist ebenfalls nur in einem stehenden, gesicherten Zustand des Rotors 8 vorgesehen und auch diese Öffnungen 7a und 7b sind gegen ein ungewolltes Öffnen durch Fliehkräfte und andere Umstände gesichert.

Weiterhin weist der innenliegende Träger 4 zwei Befestigungspunkte 4a und 4b auf, die an der Außenwand des innenliegenden Trägers 4 vorgesehen sind. Dabei können diese Befestigungspunkte 4a und 4b Stifte, Ösen, Augen, Haken oder dergleichen sein, um an diesen oder durch diese hindurch Befestigungsmittel wie z.B. ein Seil als solches oder ein Seil mit einem Haken, einem Schäkel, einer Schlaufe oder dergleichen zu befestigen.

Die Öffnungen 7a und 7b sowie die Befestigungspunkte 4a und 4b sind alle ungefähr im gleichen Abstand, d.h. in dem im Wesentlichen gleichen Radius zur Mittelachse, d.h. zur Drehachse, des Magnus-Rotors 2 angeordnet. Die Öffnung 10a ist radial um diese Mittelachse ausgebildet. Ferner liegen die Öffnungen 7a und 7b, die Öffnung 10a sowie die Befestigungspunkte 4a und 4b jeweils ungefähr in der gleichen horizontalen Ebene, d.h. sie besitzen jeweils paarweise den im Wesentlichen gleichen vertikalen Abstand zur Endplatte 10, zur Lagerung 6 oder auch zur Grundplatte 20. In dieser horizontalen Ebene sind die Öffnungen 7a und 7b bzw. die Befestigungspunkte 4a und 4b jeweils ungefähr 180° zueinander versetzt angeordnet, d.h. sie liegen sich jeweils paarweise ungefähr bzgl. der Mittelachse, d.h. Drehachse, des Magnus-Rotors 2 direkt gegenüber. Die Öffnung 10a ist derart ausgebildet, dass ihr Radius um die Mittelachse ungefähr dem größten Abstand des äußeren Randes der Öffnungen 7a und 7b entspricht bzw. so groß gewählt ist, dass der Radius der Öffnung 10a um die Mittelachse größer ist als der Abstand der Befestigungspunkte 4a und 4b von der Mittelachse in radialer Richtung.

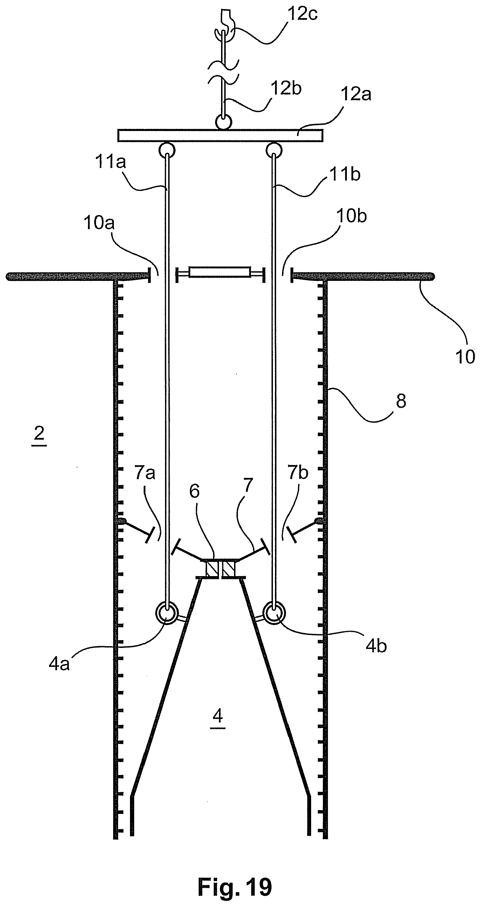

Dabei sind die beiden Öffnungen 7a und 7b direkt unterhalb der Öffnung 10a angeordnet. Ein Versatz der Öffnungen 7a und 7b gegenüber der Öffnung 10a ist nicht möglich, da die Öffnungen 7a und 7b sowie 10a an Bauteilen des Rotors 8 vorgesehen sind, die starr miteinander verbunden sind, d.h. sich nicht gegeneinander verschieben oder versetzen können. Hingegen sind die Befestigungspunkte 4a und 4b an dem innenliegenden Träger 4 als feststehenden Teil des Magnus-Rotors 2 vorgesehen und die Öffnungen 7a und 7b sowie 10a am Rotor 8 als dem beweglichen Teil des Magnus-Rotors 2. Daher ist der bewegliche Rotor 8 gegenüber dem stehenden Träger 4 in eine bestimmte Position zu bringen, um zu erreichen, dass sich die Befestigungspunkte 4a und 4b in vertikaler Richtung direkt unterhalb der Öffnungen 7a und 7b sowie Öffnung 10a des Rotors 8 befinden. Werden statt einer Öffnung 10a nach **Fig. 16** zwei Öffnungen 10a und 10b nach **Fig. 19** vorgesehen, so sind diese so vorzusehen, dass sie in Bezug auf die Öffnungen 7a und 7b sowie die Befestigungselemente 4a und 4b entsprechende Positionen und Orientierungen sowie Abmaße einnehmen.

**Fig. 17** zeigt eine detaillierte schematische Ansicht eines Magnus-Rotors 2 von oben. Dabei sind in dieser Ansicht die Endplatte 10 sowie deren Öffnung 10a dargestellt, wobei die Öffnung 10a in dieser Darstellung geschlossen ist.

**Fig. 18** zeigt eine detaillierte schematische Ansicht des Inneren eines Magnus-Rotors 2 von oben. Hierbei ist die Lagerung 6 um die Mittelachse, d.h. um die Rotationsachse, des Magnus-Rotors 2 angeordnet. Um diese Mittelachse radial herum und unterhalb der Lagerung 6 ist der stehende Träger 4 angeordnet. Über diesen und um diesen radial herum ist der Rotor 8 vorgesehen, der mittels der Lagerung 6 mit dem Träger 4 verbunden ist und den Rotor 8 trägt. Im Flansch 7 des Rotors 8, der die äußere Hülle des Rotors 8 mit der Lagerung 6 verbindet, sind die beiden Öffnungen 7a und 7b vorgesehen.

**Fig. 19** zeigt eine weitere vereinfachte schematische Seitenansicht des oberen Teils des Magnus-Rotors 2. In dieser Ansicht sind anstelle der einen Öffnung 10a nach **Fig. 16** zwei Öffnungen 10a und 10b vorgesehen. Es sind als Befestigungsmittel zwei Seile 11a und 11b gezeigt, die an den Befestigungspunkten 4a und 4b des innenliegenden Trägers 4 befestigt sind. Die Öffnungen 7a und 7b im Flansch 7 sowie die Öffnungen 10a und 10b in der Endplatte 10 sind geöffnet. Die Seile 11a und 11b werden von den Befestigungspunkten 4a und 4b durch die Öffnungen 7a und 7b sowie weiter durch die Öffnungen 10a und 10b in die Außenumgebung des Magnus-Rotors 2 geführt und sind dort z.B. über eine Traverse 12a mittels eines Seils 12b an dem Haken 12c eines Krans befestigt. Dabei sind die Seile 11a und 11b zwischen den Befestigungspunkten 4a und 4b des Trägers 4 und der Traverse 12a des Krans gespannt, d.h. sie werden von einer Kraft entgegen der Schwerkraftrichtung vertikal straff gezogen.

In diesem Zustand der **Fig. 19** kann der Magnus-Rotor 2 durch die Seile 11a und 11b z.B. von einem Kran 12a, 12b, 12c einer Hafenanlage, an der das mit Magnus-Rotoren 2 ausgestattete Schiff angelegt hat, oder auch einem schiffseigenen Kran 12a, 12b, 12c angehoben werden. Hierzu ist es erforderlich, die Verbindung zwischen dem Träger 4 des Magnus-Rotors 2 und seinem Untergrund, d.h. der Grundplatte 20 oder dem Schiffsdeck oder dergleichen zu lösen. Dabei darf die Verbindung erst dann gelöst werden, wenn der Magnus-Rotor 2 durch die gespannten Seile 11a und 11b sicher gegen ein Umkippen gesichert ist.

Ferner sind weitere Verbindungen zwischen dem innenliegenden Träger 4 und der Grundplatte 20 oder dem Schiff zu trennen, bevor der Magnus-Rotor 2 als Ganzes angehoben werden kann. So sind Verbindungen zur Zufuhr und bzw. oder Abfuhr von elektrischem Strom, Öl, Hydraulikmittel, Wasser, Druckluft oder dergleichen zum Motor 15, zur Steuerung 16 und zum Wechselrichter 17 zu trennen, bevor der Magnus-Rotor 2 mittels eines Krans 12a, 12b, 12c von der Grundplatte 20 oder dem Schiffsdeck abgehoben werden kann.

Um also einen Austausch eines Magnus-Rotors 2, z.B. zur Wartung oder Reparatur an Land, gegen einen anderen Magnus-Rotor 2 durchzuführen oder zumindest einen Magnus-Rotor 2 zu o.g. Zwecken zu entfernen, ist folgendermaßen vorzugehen:
In einem ersten Schritt ist zunächst der rotierende Magnus-Rotor 2 auszuschalten, d.h. in den Stillstand zu versetzen. Dabei ist darauf zu achten, dass die Position des Stillstands so gewählt wird, dass sich die Befestigungspunkte 4a und 4b des innenliegenden Trägers 4 in dieser Position in vertikaler Richtung direkt unterhalb der Öffnungen 7a und 7b sowie 10a und 10b des Rotors 8 befinden. Ferner ist, z.B. durch eine Bremse 13a oder eine Sicherung 13b oder dergleichen sicherzustellen, dass diese Stillstandsposition gehalten wird und sich der Rotor 8 nicht mehr gegenüber dem stehenden Träger 4 bewegen kann.

Dies kann durch eine Bremse 13a geschehen, die z.B. an dem stehenden Träger 4 angeordnet ist und auf den Motor 15 oder dessen Welle 3 wirken kann, um diesen festzusetzen. Auch kann dies durch eine Sicherung 13b oder mehrere Sicherungen 13b geschehen, die z.B. so in dem stehenden Träger 4 vorgesehen ist, dass diese z.B. mittels eines Sicherungselements 13c, der von der Sicherung 13b von dem stehenden Träger 4 aus durch eine Öffnung 13d des Rotors 8 radial hindurch geführt werden kann, diesen sichert. Dabei sind die Form und die Abmaße des Sicherungselements 13c, z.B. der Durchmesser eines Bolzens 13c, der Form und den Abmaßen der Öffnung 13d im Rotor 8 so anzupassen, dass eine Relativbewegung zwischen stehendem Träger 4 und beweglichem Rotor 8 sicher ausgeschlossen werden kann. Dies ist einerseits wichtig, weil beim Anheben des Magnus-Rotors 2 große Kräfte auf die Seile 11a und 11b wirken und sich diese Kräfte bei einem ungewollten Verdrehen vom beweglichen Rotor 8 und stehendem Träger 4 auf die Bauteile des Magnus-Rotors 2 übertragen und diese beschädigen, insbesondere deformieren können. Auch können durch eine Drehung die Seile 11a und 11b abgeschert werden und der angehobene Magnus-Rotor 2 herunterfallen. Ferner ist es bei der Befestigung der Seile 11a und 11b im Inneren des Magnus-Rotors 2 erforderlich, dass Personen sich im Inneren aufhalten und bewegen, insbesondere in Bereichen zwischen dem beweglichen Rotor 8 und dem stehenden Träger 4, weshalb aus Sicherheitsgründen eine Relativbewegung zwischen dem Rotor 8 und dem Träger 4 sicher ausgeschlossen sein muss.

In einem zweiten Schritt werden die Öffnungen 7a und 7b sowie 10a und 10b geöffnet und die Bauteile, mit denen die Öffnungen 7a und 7b sowie 10a und 10b verschlossen werden, wie z.B. Deckel oder Klappen gegen ein ungewolltes Verschließen, d.h. Zufallen, gesichert. Diese Sicherung ist erforderlich, um die Sicherheit des Personals bei den Arbeiten im Inneren des Magnus-Rotors 2 zu gewährleisten. Ferner könnte durch ein ungewolltes Verschließen bzw. Zurückfallen oder Zurückgleiten der Deckel oder Klappen ein Seil 11a oder 11b beschädigt werden und im gespannten Zustand abreißen, wodurch die gesamte Last des angehobenen Magnus-Rotors 2 auf dem verbleibenden Seil 11a oder 11b lasten würde. Durch diese Überlastung oder auch den Impuls des Abreißens des ersten Seils 11a oder 11b könnte auch das zweite verbleibende Seil 11a oder 11b reißen und hierdurch der Magnus-Rotor 2 herunterfallen, hierdurch selbst schwer beschädigt oder sogar zerstört werden und auch die Grundplatte 20 oder das Schiff oder den Untergrund der Hafenanlage oder dergleichen beschädigen oder zerstören. Auch kann der Kran 12a, 12b, 12c durch den Impuls des Abreißens beschädigt oder zerstört werden. Ferner könnten hierdurch auch Personen zu Schaden kommen. Ebenso kann in dem Fall, dass bei einem Abreißen eines ersten Seils 11a oder 11b das zweite Seil 11a oder 11b nicht reißt und die gesamte Last trägt, durch das Abreißen des ersten Seils 11a oder 11b eine seitliche Schwingung des angehobenen Magnus-Rotors 2 ausgelöst werden, wodurch der angehobene seitlich ausschlagende Magnus-Rotor 2 ebenfalls Grundplatte 20, Schiff, Hafenanlagen, den anhebenden Kran 12a, 12b, 12c oder dergleichen beschädigen oder zerstören oder Personal in der Umgebung verletzen kann.

In einem dritten Schritt wird durch einen Kran 12a, 12b, 12c eine Hebevorrichtung 12a, 12b, 12c mit zwei Seilen 11a und 11b durch die Öffnungen 7a und 7b sowie 10a und 10b zu den Befestigungspunkten 4a und 4b heruntergelassen und dort sicher befestigt. Für den Fall des ungewollten Lösens oder Abreißens der Seile 11a und 11b von den Befestigungspunkten 4a und 4b kann die oben beschriebene Gefährdung der Umgebung des angehobenen Magnus-Rotors 2 auftreten wie zuvor beschrieben, weshalb eine sichere Befestigung der Seile 11a und 11b an den Befestigungspunkten 4a und 4b sicherzustellen ist.

In einem vierten Schritt sind die Seile 11a und 11b anzuziehen, d.h. zu spannen. Hierzu ist zunächst sicherzustellen, dass sich kein Personal mehr im Inneren des anzuhebenden Magnus-Rotors 2 oder auf diesem drauf befindet. Ferner sind die Seile 11a und 11b nur soweit anzuziehen, dass sie nicht durchhängen und im Falle des Lösens der Befestigung zwischen Magnus-Rotor 2 und seinem Untergrund das Gewicht des Magnus-Rotors 2 sicher aufnehmen können, ohne dass dieser umkippen kann. Dabei ist insbesondere darauf zu achten, dass die Seile 11a und 11b soweit angezogen werden, dass durch ein Kippen des gelösten Magnus-Rotors 2 kein Impuls auf die Seile 11a und 11b gegeben wird, da gerade dies zu einem Reißen der Seile 11a und 11b führen kann.

In einem fünften Schritt werden nun die Befestigungen zwischen dem Träger 4 und der Grundplatte 20 oder dem Schiff oder dergleichen gelöst und entfernt. Ferner werden alle sonstigen Verbindungen, z.B. zur Zufuhr oder Abfuhr von Medien und Energie, gelöst und entfernt, die von Außen dem Magnus-Rotor 2 zugeführt werden, wie z.B. die Energieversorgung des Motors 15, der Steuerung 16 oder des Wechselrichters 17. Ist dies geschehen, steht der Magnus-Rotor 2 aufgrund seines Eigengewichts auf der Grundplatte 20 oder dem Schiffsdeck und wird gegen ein seitliches Verkippen oder Verrutschen durch die Seile 11a und 11b sicher gehalten.

In einem sechsten Schritt kann der Magnus-Rotor 2 durch einen Kran 12a, 12b, 12c mittels der Seile 11a und 11b angehoben und versetzt, d.h. von der Grundplatte 20 oder dem Schiffsdeck entfernt werden. Dabei kann der Magnus-Rotor 2 dann auf einer anderen Grundplatte oder dergleichen abgesetzt und dort mittels Befestigungsmitteln gesichert werden. Der Magnus-Rotor 2 wird dabei erfindungsgemäß als ganzes System entfernt, d.h. mit samt des Motors 15, der Steuerung 16 und des Wechselrichters 17, die im Inneren des Trägers 4 vorgesehen sind. Dies bedeutet, dass ein Entfernen eines Magnus-Rotors 2 erfindungsgemäß ohne eine Veränderung des Systems Magnus-Rotors 2 durchgeführt werden kann, d.h. ohne die einzelnen Komponenten wie z.B. rotierender Teil 8, innenliegender Träger 4, Motor 15, Steuerung 16 und Wechselrichter 17 voneinander zu trennen. Dies ist vorteilhaft, da diese aufeinander abgestimmt sind und diese Abstimmung durch den Austausch des Magnus-Rotors 2 als Ganzes beigehalten werden kann, d.h. nicht verändert wird.

Um einen Austausch zweier Magnus-Rotoren 2 gegeneinander durchzuführen, ist nun ein zweiter Magnus-Rotor 2 an die Stelle des entfernten ersten Magnus-Rotors 2 zu befördern. Dies geschieht durch die Umkehrung der o.g. Schritte für diesen zweiten Magnus-Rotor 2.

Der entfernte erste Magnus-Rotor 2 kann nun, z.B. an Land in einer geeigneten Wartungs- und Reparatureinrichtung, gewartet, instand gesetzt oder erneuert werden. Dabei ist es vorteilhaft, diese Maßnahmen erstens nicht auf einem schwankenden Schiff im montierten Zustand des Magnus-Rotors 2 und zweitens in einer dafür eingerichteten Einrichtung durchzuführen. So kann die Bewegung des Schiffes, auch im Hafen, die Arbeiten an dem Magnus-Rotor 2 erschweren und verzögern. Ferner müsste hierzu das Personal, deren Werkzeug und die Materialien und insbesondere Ersatzteile in den betreffenden Hafen geschafft werden, in dem sich das Schiff befindet. Auch sind bei einem montierten, d.h. betriebsfähigen Magnus-Rotor 2 nicht alle Bereiche und Bauteile zugänglich. Ferner würde dann das Innere der Lagerung 6 der Witterung ausgesetzt werden, was einer Reparatur oder Wartung der Lagerung 6 nicht zuträglich wäre. Schließlich können auch Ersatzteile erforderlich sein, die sich nur mit einem unverhältnismäßigen Aufwand transportieren lassen.

Daher ist es vorteilhaft, den Magnus-Rotor 2 als Ganzes entfernen zu können. So kann das Schiff umgehend mit einem zweiten Magnus-Rotor 2 ausgerüstet werden und wieder in See stechen, während der erste ausgetauschte Magnus-Rotor 2 im Hafen in der Wartungs- und Reparatureinrichtung verbleibt. So kann eine wartungs- oder reparaturbedingte Liegezeit des Schiffes vermieden und hierdurch seine Wirtschaftlichkeit verbessert werden. Ferner kann der erste ausgetauschte Magnus-Rotor 2 in einer entsprechenden Wartungs- und Reparatureinrichtung einfacher, besser, schneller und günstiger gewartet oder instand gesetzt werden als bei einer Durchführung dieser Maßnahmen im montierten Zustand auf einem Schiff. Auch ist es hierbei vorteilhaft, den gesamten Magnus-Rotor 2 als System, d.h. mit den im Inneren des Trägers 4 vorgesehenen Komponenten Motor 15, Steuerung 16 und Wechselrichter 17, zu entfernen bzw. auszutauschen, da sowohl die mechanischen als auch elektrischen Komponenten jedes Magnus-Rotors 2 aufeinander abstimmt sind und ein Austausch einzelner Komponenten, soweit dieser aufgrund ihrer Anordnung, insbesondere im Inneren des Trägers 4, überhaupt möglich wäre, diese Abstimmung aufheben und eine teilweise sehr aufwendige Neuabstimmung nach dem Austausch erforderlich machen würde.

Der Gedanke der Erfindung betrifft den Antrieb eines Magnus-Rotors, der nicht am Boden des Magnus-Rotors angesiedelt ist, sondern auf halber Höhe und nicht außen, sondern innen. Dieser Antrieb weist einen Riemenantrieb auf.

Die Erfindung betrifft ebenfalls ein Schiff (Frachtschiff) mit mindestens einem (vorzugsweise vier) Magnusrotor auf dem Deck des Schiffes.

## Patentansprüche

1. Magnus-Rotor (2), mit
einem Träger (4) mit einem oberen Ende, wobei der Träger (4) im Inneren des Magnus-Rotors (2) angeordnet ist,
einem Rotor (8), welcher im Betrieb des Magnus-Rotors (2) um den Träger (4) rotiert,
einer Lagerung (6) auf dem oberen Ende des Trägers (4), welche den Rotor (8) auf dem Träger (4) trägt,
einer Welle (3), welche durch die Lagerung (6) hindurch angeordnet ist und welche mit dem Rotor (8) oberhalb der Lagerung (6) verbunden ist, und
**gekennzeichnet durch** einen Motor (15), welcher im Inneren des Trägers (4) am oberen Ende des Trägers angeordnet ist und welcher die Welle (3) rotierend antreibt,
wobei der Motor (15) ein erstes Zahnrad (15a) aufweist,
wobei die Welle (3) ein zweites Zahnrad (3a) aufweist, und
wobei das erste Zahnrad (15a) des Motors (15) einen Zahnriemen (14) rotierend antreibt, der über das zweite Zahnrad (3a) die Welle (3) rotierend antreibt,
wobei der Motor (15) auf einer Spannvorrichtung (15b) vorgesehen ist,
wobei die Spannvorrichtung (15b) radial verschiebbar mit dem Träger (4) verbunden ist.

2. Magnus-Rotor (2) nach Anspruch 1, ferner mit
einer Einhausung (15c), welche den Motor (15) und/oder das Zahnrad (15a) und/oder den Zahnriemen (14) und/oder das Zahnrad (3a) und/oder den im Inneren des Trägers (4) angeordneten Teil der Welle (3) zumindest seitlich und nach oben und radial abschließt.

3. Magnus-Rotor (2) nach einem der Ansprüche 1 bis 2,
wobei der Motor (15) an seiner Oberseite wenigstens einen Befestigungspunkt (18b) aufweist,
wobei der Träger (4) an seiner Innenseite oberhalb des Motors (15) wenigstens einen Befestigungspunkt (18c) aufweist, und
wobei zwischen dem Befestigungspunkt (18b) des Motors (15) und dem Befestigungspunkt (18c) des Trägers (4) ein Befestigungsmittel (18c) vorgesehen ist, um die Gewichtskraft des Motors (15) über den Befestigungspunkt (18b) des Motors (15) auf den Befestigungspunkt (18c) des Trägers (4) zu übertragen.

4. Magnus-Rotor (2) nach einem der vorherigen Ansprüche, ferner mit
einer Wellenbefestigungsvorrichtung (5), die am oberen Ende der Welle (3) oberhalb der Lagerung (6) vorgesehen ist, und
einer Rotorbefestigungsvorrichtung (7), die die Wellenbefestigungs-vorrichtung (5) mit dem Rotor (8) verbindet.

5. Magnus-Rotor (2) nach einem der vorherigen Ansprüche, ferner mit
einer am unteren Außenumfang des Magnus-Rotors (2) angeordneten Führungsrolle (12), welche spielfrei am Magnus-Rotor (2) anliegt,
einer Trittfläche (29), welche unterhalb der Führungsrolle (12) angeordnet ist, und
einer Abdeckung (28a-28h), welche die Führungsrolle (12) und die Trittfläche (29) abdeckt,
wobei die Abdeckung (28a-28h) in einem geöffneten Zustand die Führungsrolle (12) und die Trittfläche (29) so freigibt, dass eine Person auf der Trittfläche (29) Arbeiten an der Führungsrolle (12) durchführen kann.

6. Magnus-Rotor (2) nach Anspruch 5,
wobei die Trittfläche (29) als Teil einer Grundplatte oder eines Schiffsdecks oder dergleichen ausgebildet ist, auf der der Magnus-Rotor (2) befestigt ist.

7. Magnus-Rotor (2) nach Anspruch 5 oder 6,
wobei die Trittfläche (29) mit einer Oberfläche versehen oder die Oberfläche beschichtet ist, um ein Rutschen auf der Trittfläche (29) zu verhindern.

8. Magnus-Rotor (2) nach einem der Ansprüche 5 bis 7,
wobei die Abdeckung (28a-28h) eine Bewegungsvorrichtung (30) aufweist, die dazu ausgestaltet ist, die Abdeckung (28a-28h) in dem geöffneten Zustand in einer vertikalen Höhe oberhalb der Trittfläche (29) zu halten.

9. Magnus-Rotor (2) nach einem der Ansprüche 5 bis 8,
wobei die Bewegungsvorrichtung (30) dazu ausgestaltet ist, sich in dem geöffneten Zustand der Abdeckung (28a-28h) in eine im Wesentlichen radiale Richtung des Magnus-Rotors (8) von diesem zur geöffneten Abdeckung (28a-28h) oberhalb des Trittfläche (29) zu erstrecken.

10. Magnus-Rotor (2) nach einem der Ansprüche 5 bis 9,
wobei die Bewegungsvorrichtung (30) mittels einer Arretierungsvorrichtung (31a, 31b) in dem geschlossenen Zustand der Abdeckung (28a-28h) gesichert wird.

11. Schiff, insbesondere Frachtschiff, mit wenigstens einem Magnus-Rotor (2) nach einem der vorherigen Ansprüche.

## Claims

1. A Magnus rotor (2) comprising
a carrier (4) with an upper end, the carrier (4) is arranged in the interior of the Magnus rotor (2),
a rotor (8) which in operation of the Magnus rotor (2) rotates about the carrier (4),
a bearing (6) on the upper end of the carrier (4) which carries the rotor (8) on the carrier (4), and
a shaft (3) which is arranged through the bearing (6) and which is connected to the rotor (8) above the bearing (6), and
**characterized in that**
a motor (15) which is arranged in the interior of the carrier (4) at the upper end of the carrier and which drives the shaft (3) in rotation,
wherein the motor (15) has a first gear (15a),
wherein the shaft (3) has a second gear (3a), and
wherein the first gear (15a) of the motor (15) drives in rotation a toothed belt (14) which by way of the second gear (3a) drives the shaft (3) in rotation,
wherein the motor (15) is provided on a tensioning device (15b), and
wherein the tensioning device (15b) is radially displaceably connected to the carrier (4).

2. A Magnus rotor (2) according to claim 1 and further comprising
a housing (15c) which at least laterally and upwardly and radially closes off the motor (15) and/or the gear (15a) and/or the toothed belt (14) and/or the gear (3a) and/or the part of the shaft (3), that is arranged in the interior of the carrier (4).

3. A Magnus rotor (2) according to one of claims 1 to 2
wherein at its top side the motor (15) has at least one fixing point (18b),
wherein at its inside above the motor (15) the carrier (14) has at least one fixing point (18c), and
wherein provided between the fixing point (18b) of the motor (15) and the fixing point (18c) of the carrier (4) is a fixing means (18c) for transmitting the force due to the weight of the motor (15) by way of the fixing point (18b) of the motor (15) to the fixing point (18c) of the carrier (4).

4. A Magnus rotor (2) according to one of the preceding claims and further comprising
a shaft fixing device (5) provided at the upper end of the shaft (3) above the bearing (6), and
a rotor fixing device (7) connecting the shaft fixing device (5) to the rotor (8).

5. A Magnus rotor (2) according to one of the preceding claims and further comprising
a guide roller (12) which is arranged at the lower outer periphery of the Magnus rotor (2) and which bears play-free against the Magnus rotor (2),
a walkway surface (29) arranged beneath the guide roller (12), and
a cover (28a - 28h) which covers the guide roller (12) and the walkway surface (29),
wherein in an opened condition the cover (28a - 28h) clears the guide roller (12) and the walkway surface (29) in such a way that a person on the walkway surface (29) can carry out working operations at the guide roller (12).

6. A Magnus rotor (2) according to claim 5 wherein the walkway surface (29) is in the form of part of a base plate or a ship's deck or the like, on which the Magnus rotor (2) is fixed.

7. A Magnus rotor (2) according to claim 5 or claim 6 wherein the walkway surface (29) is provided with a surface or the surface is coated to prevent slipping on the walkway surface (29).

8. A Magnus rotor (2) according to one of claims 5 to 7 wherein the cover (28a - 28h) has a motion device (30) adapted to hold the cover (28a - 28h) in the opened condition at a vertical height above the walkway surface (29).

9. A Magnus rotor (2) according to one of claims 5 to 8 wherein the motion device (30) is adapted to extend in the opened condition of the cover (28a - 28h) in a substantially radial direction of the Magnus rotor (2) from same to the opened cover (28a - 28h) above the walkway surface (29).

10. A Magnus rotor (2) according to one of claims 5 to 9 wherein the motion device (30) is secured in the closed condition of the cover (28a - 28h) by means of an arresting device (31a, 31b).

11. A ship, in particular a cargo ship, comprising at least one Magnus rotor (2) according to one of the preceding claims.

## Revendications

1. Rotor à effet Magnus (2), avec
un support (4) avec une extrémité supérieure, dans lequel le support (4) est disposé à l'intérieur du rotor à effet Magnus (2),
un rotor (8), qui tourne autour du support (4) lors du fonctionnement du rotor à effet Magnus (2),
un palier (6) sur l'extrémité supérieure du support (4), lequel supporte le rotor (8) sur le support (4),
un arbre (3), qui est disposé à travers le palier (6) et qui est relié au rotor (8) au-dessus du palier (6), et
**caractérisé par** un moteur (15), qui est disposé à l'intérieur du support (4) au niveau de l'extrémité supérieure du support et qui entraîne en rotation l'arbre (3),
dans lequel le moteur (15) présente une première roue dentée (15a),
dans lequel l'arbre (3) présente une deuxième roue dentée (3a), et
dans lequel la première roue dentée (15a) du moteur (15) entraîne en rotation une courroie dentée (14), qui entraîne en rotation l'arbre (3) par l'intermédiaire de la deuxième roue dentée (3a),
dans lequel le moteur (15) est prévu sur un dispositif de serrage (15b),
dans lequel le dispositif de serrage (15b) est relié de manière à pouvoir être mis en coulissement radialement au support (4).

2. Rotor à effet Magnus (2) selon la revendication 1, avec en outre
une enceinte (15c), qui renferme le moteur (15) et/ou la roue dentée (15a) et/ou la courroie dentée (14) et/ou la roue dentée (3a) et/ou la partie de l'arbre (3) disposée à l'intérieur du support (4) au moins latéralement et vers le haut et radialement.

3. Rotor à effet Magnus (2) selon l'une quelconque des revendications 1 à 2,
dans lequel le moteur (15) présente, au niveau de son côté supérieur, au moins un point de fixation (18b),
dans lequel le support (4) présente au niveau de son côté intérieur au-dessus du moteur (15) au moins un point de fixation (18c), et
dans lequel un moyen de fixation (18c) est prévu entre le point de fixation (18b) du moteur (15) et le point de fixation (18c) du support (4) afin de transmettre la force de poids du moteur (15) sur le point de fixation (18c) du support (4) par l'intermédiaire du point de fixation (18b) du moteur (15).

4. Rotor à effet Magnus (2) selon l'une quelconque des revendications précédentes, avec en outre
un dispositif de fixation d'arbre (5), qui est prévu au niveau de l'extrémité supérieure de l'arbre (3) au-dessus du palier (6), et
un dispositif de fixation de rotor (7), qui relie le dispositif de fixation d'arbre (5) au rotor (8).

5. Rotor à effet Magnus (2) selon l'une quelconque des revendications précédentes, avec en outre
un galet de guidage (12) disposé au niveau de la périphérie extérieure inférieure du rotor à effet Magnus (2), lequel repose sans jeu au niveau du rotor à effet Magnus (2),
une surface pouvant être empruntée (29), qui est disposée sous le galet de guidage (12), et
un recouvrement (28a - 28h), qui recouvre le galet de guidage (12) et la surface pouvant être empruntée (29),
dans lequel le recouvrement (28a - 28h) dégage, dans un état ouvert, le galet de guidage (12) et la surface pouvant être empruntée (29) de telle sorte qu'une personne peut exécuter, sur la surface pouvant être empruntée (29), des travaux sur le galet de guidage (12).

6. Rotor à effet Magnus (2) selon la revendication 5,
dans lequel la surface pouvant être empruntée (29) est réalisée sous la forme d'une partie d'une plaque de base ou d'un pont de navire ou similaire, sur laquelle/lequel est fixé le rotor à effet Magnus (2).

7. Rotor à effet Magnus (2) selon la revendication 5 ou 6,
dans lequel la surface pouvant être empruntée (29) est pourvue d'une couche de surface ou la couche de surface est enduite afin d'empêcher de glisser sur la surface pouvant être empruntée (29).

8. Rotor à effet Magnus (2) selon l'une quelconque des revendications 5 à 7,
dans lequel le recouvrement (28a - 28h) présente un dispositif de déplacement (30) qui est configuré afin de maintenir le recouvrement (28a - 28h) dans l'état ouvert à une hauteur verticale au-dessus de la surface pouvant être empruntée (29).

9. Rotor à effet Magnus (2) selon l'une quelconque des revendications 5 à 8,
dans lequel le dispositif de déplacement (30) est configuré afin de s'étendre, dans l'état ouvert du recouvrement (28a - 28h), dans une direction sensiblement radiale du rotor à effet Magnus (8) depuis ce dernier en direction du recouvrement (28a - 28h) ouvert au-dessus de la surface pouvant être empruntée (29) .

10. Rotor à effet Magnus (2) selon l'une quelconque des revendications 5 à 9,
dans lequel le dispositif de déplacement (30) est bloqué au moyen d'un dispositif d'arrêt (31a, 31b) dans l'état fermé du recouvrement (28a - 28h).

11. Navire, en particulier cargo, avec au moins un rotor à effet Magnus (2) selon 1"une quelconque des revendications précédentes.
